# EUROPEAN PATENT APPLICATION

(11) **EP 4 198 107 A1**
(43) Date of publication of application: **21.06.2023**
(21) Application number: 22214344.8
(22) Date of filing: 16.12.2022
(51) Int. Cl.: C09K 19/22, C09K 19/24, B82Y 20/00, B41M 3/14, B42D 25/29, G02B 1/00, C09K 19/04

(54) **STRUCTURES FOR PHYSICAL UNCLONABLE FUNCTION USING SPONTANEOUS CHIRAL SYMMETRY BREAKING AND METHOD OF PREPARING THE SAME**

(30) Priority: 17.12.2021 KR 20210181789
(71) Applicant: Korea Advanced Institute of Science and Technology, Daejeon 34141 (KR)
(72) Inventor: YOON, Dong Ki, 34141 Yuseong-gu (KR); PARK, Geonhyeong, 34141 Yuseong-gu (KR); PARK, Hyewon, 34141 Yuseong-gu (KR)
(74) Representative: Mewburn Ellis LLP

(57) **Abstract**

The present invention relates to a structure for a physical unclonable function using spontaneous chiral symmetry breaking and a method of preparing the same, in which a chiral random pattern, which is unclonable and is observable with an optical microscope and a mobile phone camera, is formed using chiral photonic crystals in which chiral symmetry breaking occurs and is applied to a physical unclonable function (PUF), thereby attaining high encoding capacity, high recognition rate, and security while achieving high performance in reproducibility, uniqueness, unpredictability, and reconfigurability, and forming a desired pattern through a conventional photolithography method.

## Description

### TECHNICAL FIELD

The present invention relates to a structure for a physical unclonable function using spontaneous chiral symmetry breaking and a method of preparing the same, and more particularly to a structure for a physical unclonable function using spontaneous chiral symmetry breaking, in which a chiral random pattern, which is unclonable and is observable with an optical microscope and a mobile phone camera, is formed using chiral photonic crystals in which chiral symmetry breaking occurs and applied to a physical unclonable function (PUF), and a method of preparing the same.

### BACKGROUND ART

Chiral materials have optical activity, in which an optical rotation phenomenon in which a polarization axis of linearly polarized light passing through a chiral medium rotates clockwise or counterclockwise occurs. The degree and direction of rotation are attributed to the intrinsic properties and chirality of the materials. In general, chiral organic materials contain a chiral center in the molecular structure thereof. However, there are cases in which achiral molecules form chiral structures through self-assembly. In this case, as there is no preference for right- or left-handed chiral structures, the two structures are randomly formed. This is called "spontaneous chiral symmetry breaking" and it is known that the probability of formation of structures with different chirality is 50%.

An authentication system based on a physical unclonable function (PUF) has recently been developed for unforgeable anti-counterfeiting. The PUF, also known as a physical one-way function, is technology that creates a security key that prevents physical cloning by making subtle changes to the structure of semiconductors developed using the same process, and represents a physical entity with functions similar to fingerprints that are unique and cannot be easily duplicated. A PUF is fabricated using inherent randomness of the physical microstructure of hardware in most integrated circuits (ICs). Since the chip fabrication process involves many complex lithography steps of integrating billions of devices, differences in the physical microstructure between chips are unavoidable and unpredictable, making it impossible for hackers to fabricate clones of chips within a finite timeframe. Moreover, a conventional IC-based PUF has been regarded as a strong security method to date because nondeterministic exponential time is required for data decryption using a brute-force attack by hackers. However, as quantum computers are developed, existing IC-based PUFs will be easily exposed to risks, and thus a new type of PUF that is capable of storing more information and is unclonable is needed.

In Non-Patent Documents 2 to 20, when the security code is leaked to the outside, there is a problem in that hacking becomes easy and a new device is required for new security. Furthermore, easy detection using a typical method is possible, which is undesirable (Non-Patent Documents 3, 5, 7, 8, 10, 12, 17, 19, and 22).

Therefore, the present inventors have made great efforts to solve the above problems, and ascertained that, when an unclonable chiral random pattern is formed using chiral photonic crystals in which chiral symmetry breaking occurs and is applied to a physical unclonable function (PUF), it is possible to attain high encoding capacity and security while achieving high performance in characteristics such as reproducibility, uniqueness, unpredictability, and reconfigurability, and also to form a desired pattern through a conventional photolithography method, thus culminating in the present invention.

### [Citation List]

### [Patent Documents]

Korea Patent No. 10-2249409
Korea Patent No. 10-2195795
Korea Patent No. 10-1328975

### [Non-Patent Documents]

1. Babaei, A. & Schiele, G. Physical Unclonable Functions in the Internet of Things: State of the Art and Open Challenges. Sensors 19, 3208 (2019).
2. Pappu, R. Physical One-Way Functions. Science 297, 2026-2030 (2002).
3. Lin, Y. et al. Unclonable Micro-Texture with Clonable Micro-Shape towards Rapid, Convenient, and Low-Cost Fluorescent Anti-Counterfeiting Labels. Small 17, 2100244 (2021).
4. Zhang, T. et al. Random Nanofracture-Enabled Physical Unclonable Function. Adv. Mater. Technol. 6, 2001073 (2021).
5. Hu, Y. et al. Flexible and Biocompatible Physical Unclonable Function Anti-Counterfeiting Label. Adv. Funct. Mater. 31, 2102108 (2021).
6. Jing, L. et al. Multigenerational Crumpling of 2D Materials for Anticounterfeiting Patterns with Deep Learning Authentication. Matter 3, 2160-2180 (2020).
7. Martinez, P. et al. Laser Generation of Sub-Micrometer Wrinkles in a Chalcogenide Glass Film as Physical Unclonable Functions. Adv. Mater. 32, 2003032 (2020).
8. Liu, Y. et al. Unclonable Perovskite Fluorescent Dots with Fingerprint Pattern for Multilevel Anticounterfeiting. ACS Appl. Mater. Interfaces 12, 39649-39656 (2020).
9. Hu, Z. et al. Physically unclonable cryptographic primitives using self-assembled carbon nanotubes. Nature Nanotech 11, 559-565 (2016).
10. Liu, Y. et al. Inkjet-printed unclonable quantum dot fluorescent anti-counterfeiting labels with artificial intelligence authentication. Nat. Commun. 10, 2409 (2019).
11. Arppe-Tabbara, R., Tabbara, M. & Sorensen, T. J. Versatile and Validated Optical Authentication System Based on Physical Unclonable Functions. ACS Appl. Mater. Interfaces 11, 6475-6482 (2019).
12. Carro-Temboury, M. R., Arppe, R., Vosch, T. & Sorensen, T. J. An optical authentication system based on imaging of excitation-selected lanthanide luminescence. Sci. Adv. 4, e1701384 (2018).
13. Zhang, R. et al. Nanoscale diffusive memristor crossbars as physical unclonable functions. Nanoscale 10, 2721-2726 (2018).
14. Hwang, K. M. et al. Nano-electromechanical Switch Based on a Physical Unclonable Function for Highly Robust and Stable Performance in Harsh Environments. ACS Nano 11, 12547-12552 (2017).
15. Geng, Y. et al. High-fidelity spherical cholesteric liquid crystal Bragg reflectors generating unclonable patterns for secure authentication. Sci. Rep. 6, 26840 (2016).
16. Demirok, U. K., Burdick, J. & Wang, J. Orthogonal Multi-Readout Identification of Alloy Nanowire Barcodes. J. Am. Chem. Soc. 131, 22-23 (2009).
17. Tian, L. et al. Plasmonic Nanogels for Unclonable Optical Tagging. ACS Appl. Mater. Interfaces 11 (2016).
18. Bae, H. J. et al. Self-organization of maze-like structures via guided wrinkling. Sci. Adv. 3, e1700071 (2017).
19. Gu, Y. et al. Gap-enhanced Raman tags for physically unclonable anti counterfeiting labels. Nat. Commun. 11, 516 (2020).
20. Nakayama, K. Optical security device providing fingerprint and designed pattern indicator using fingerprint texture in liquid crystal. Opt. Eng. 51, 040506 (2012).
21. Wali, A. et al. Biological physically unclonable function. Commun. Phys. 2, 39 (2019).
22. Leem, J. W. et al. Edible unclonable functions. Nat. Commun. 11, 328 (2020).

### SUMMARY OF THE INVENTION

It is an object of the present invention to provide a chiral structure for PUFs having superior reproducibility, uniqueness, unpredictability, and reconfigurability, and high encoding capacity and security, and a method of preparing the same.

In order to accomplish the above object, the present invention provides a helical nanofilament (HNF) photonic crystal structure obtained by patterning helical nanofilaments (HNFs) in which a bent-shaped liquid crystal molecule is grown in a twisted layered structure by self-assembly.

In addition, the present invention provides a method of preparing an HNF photonic crystal structure including (a) orienting an axis of liquid crystals consisting of HNFs perpendicular to a direction of ultraviolet irradiation by irradiating HNFs with ultraviolet light; and (b) obtaining an HNF photonic crystal structure by cooling to a B4 phase temperature of the liquid crystals to reorient the axis of the liquid crystals parallel to the direction of ultraviolet irradiation and thus form HNF photonic crystals.

### BRIEF DESCRIPTION OF THE DRAWINGS

The above and other objects, features, and other advantages of the present invention will be more clearly understood from the following detailed description taken in conjunction with the accompanying drawings, in which:

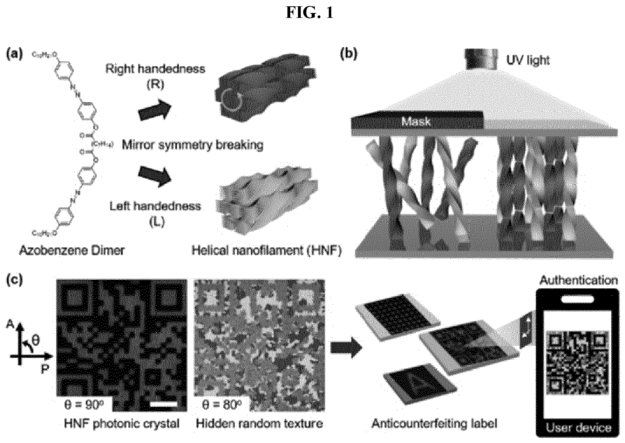

FIG. 1(a) shows helical nanofilaments (HNFs) formed through self-assembly from an azobenzene dimer molecule, FIG. 1(b) schematically shows a process of fabricating HNF photonic crystals, and FIG. 1(c) shows polarized optical microscope images of a photopatterned HNF photonic crystal and a hidden chiral random pattern;

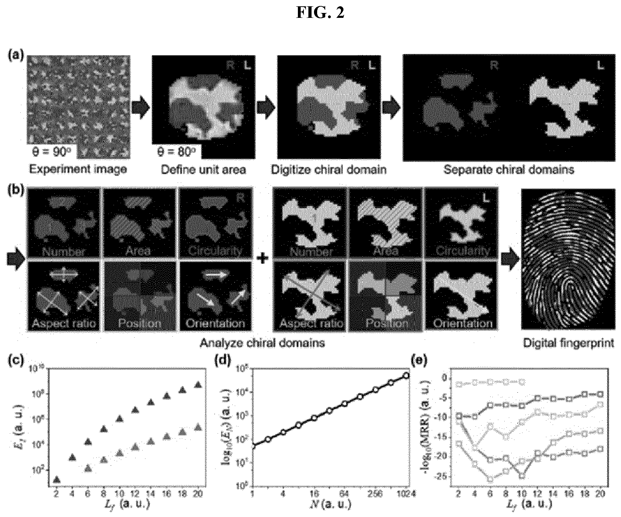

FIG. 2(a) shows a process for binarization using a 0=80° experimental image of the HNF photonic crystal film, FIG. 2(b) shows six morphological features of chiral domains, FIG. 2(c) shows encoding capacity per unit cell, in which the black triangles represent the encoding capacity calculated from the classes for area, circularity, aspect ratio, and orientation and the red triangles represent the encoding capacity calculated from the class for position, FIG. 2(d) shows encoding capacity depending on the number of unit cells, and FIG. 2(e) shows misrecognition rates calculated from the classes for morphological features, in which the yellow, purple, green, blue, and sky blue lines represent orientation, circularity, aspect ratio, area, and position, respectively;

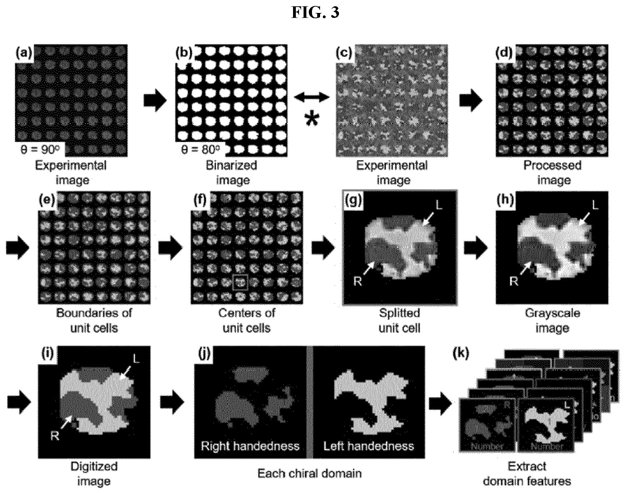

FIGs. 3(a) and 3(c) show θ=90° and θ=80° experimental images of 64 unit-cell photonic crystals, FIG. 3(b) shows a binarized image obtained by distinguishing the patterned photonic crystal areas in the image of FIG. 3(a), FIG. 3(d) shows an image obtained through the "AND" operation of the image of FIG. 3(b) and the image of FIG. 3(c), FIG. 3(e) shows setting the boundaries of the patterned photonic crystal areas, FIG. 3(f) shows defining the center of each unit cell, FIG. 3(g) shows dividing the processed image into unit cell images having a finite size, FIG. 3(h) shows the converted grayscale image, FIG. 3(i) shows an image binarized according to the chirality of domains, FIG. 3(j) shows domains separated according to chirality, and FIG. 3(k) shows extraction of morphological features of each domain;

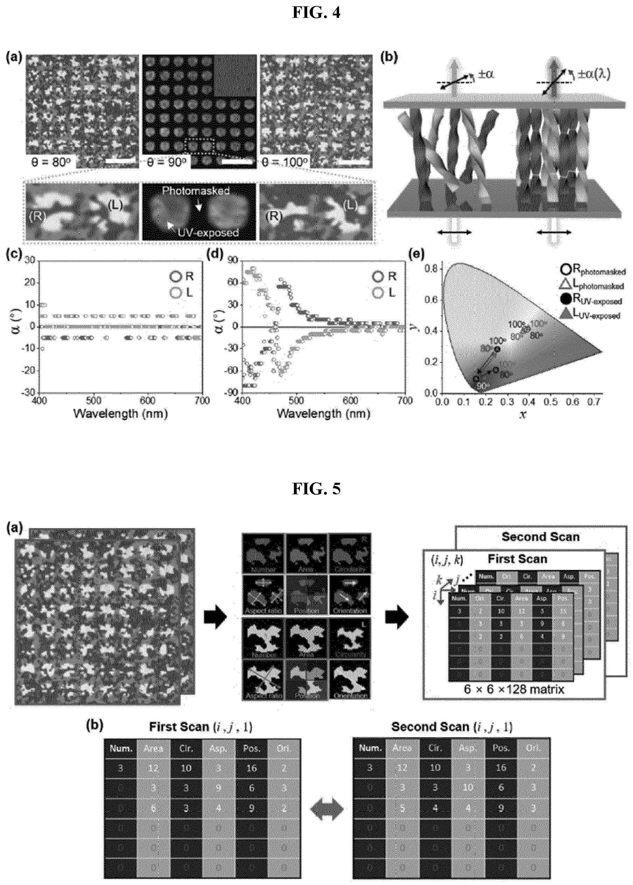

FIG. 4(a) shows polarized optical microscope images of patterned HNF photonic crystals, FIG. 4(b) schematically shows a rotation of linearly polarized light occurring in an area not irradiated with ultraviolet light (left) and an area irradiated with ultraviolet light (right), FIG. 4(c) shows a graph of optical rotation (α) depending on the wavelength in the area not irradiated with ultraviolet light, FIG. 4(d) shows a graph of optical rotation depending on the wavelength in the area irradiated with ultraviolet light, and FIG. 4(e) shows the color coordinate system of each chiral domain depending on the angle of the polarizer;
FIGs. 5(a) and 5(b) show a similarity index (Sf) obtained through pairwise comparison with matrices obtained from the experimental images, FIG. 5(a) showing two 6 × 6 × 128 matrix data obtained by scanning the sample twice and FIG. 5(b) showing an example of calculation of the similarity index by comparing 128 two-dimensional matrices;

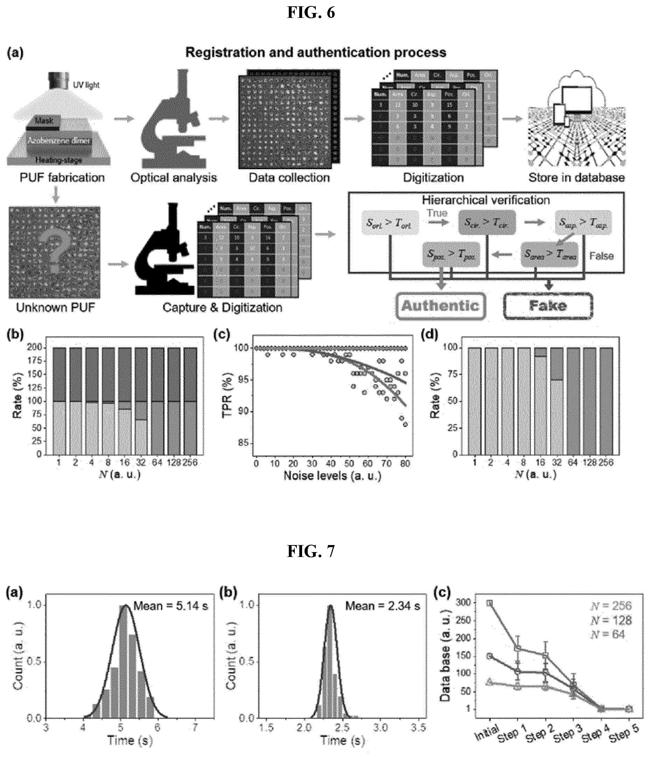

FIG. 6(a) schematically shows a process of registering a matrix obtained from the morphological features of patterned photonic crystals in a database and a process of authenticating a matrix obtained from the morphological features of newly fabricated photonic crystals through an existing database, FIG. 6(b) shows reliability evaluation of the proposed authentication process depending on the number of unit cells, in which red, sky blue, and blue bars represent true-negative rate (TNR), false-negative rate (FNR), and true-positive rate (TPR), respectively, FIG. 6(c) shows results of a robustness test against noise, in which green, purple, and orange lines represent results in the presence of 64, 128, and 256 unit cells, respectively, and FIG. 6(d) shows results of a reproducibility test using different microscopes depending on the number of unit cells;
FIGs. 7(a) and 7(b) show distribution of the time required for true authentication and false authentication through a hierarchical authentication process, and FIG. 7(c) shows the amount of database that decreases step by step depending on the number of unit cells;

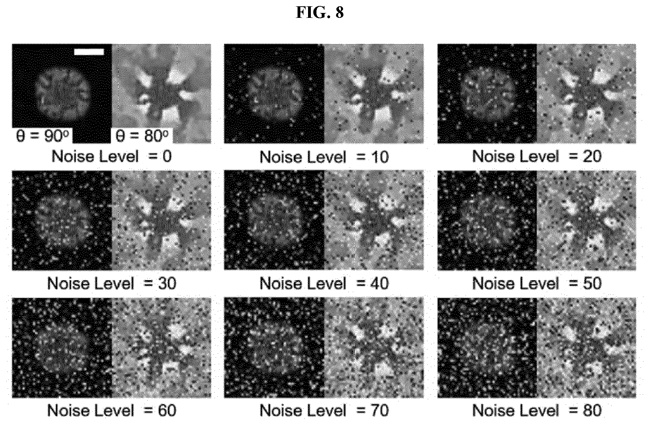

FIG. 8 shows images used for the robustness test against noise;

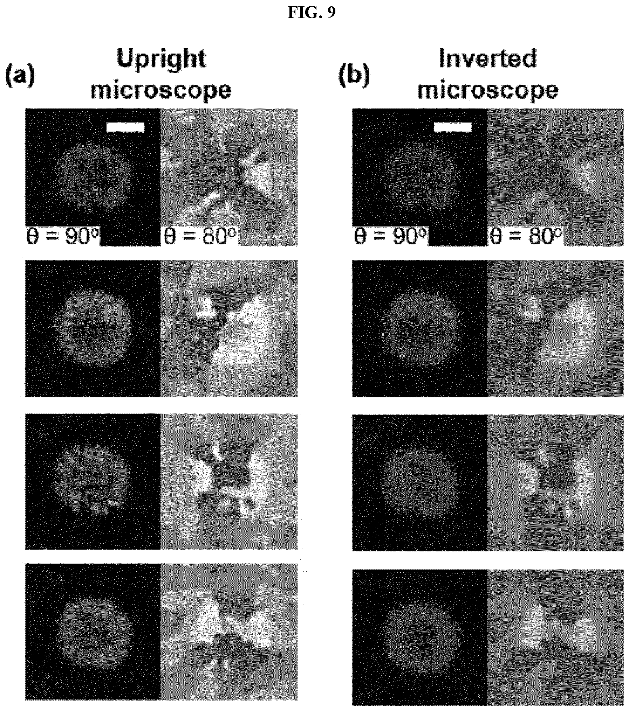

FIGs. 9(a) and 9(b) show images used for the reproducibility test using different microscopes, FIG. 9(a) showing images obtained with an upright microscope and FIG. 9(b) showing images obtained with an inverted microscope; and

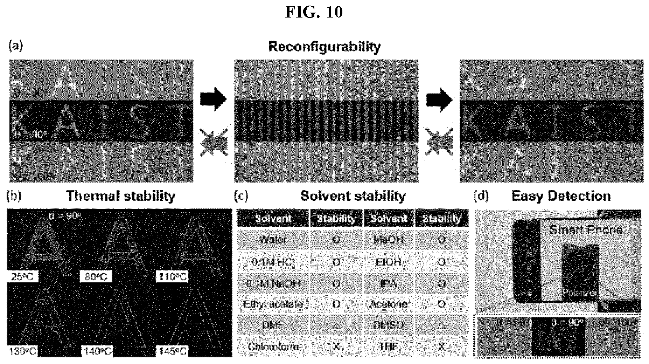

FIG. 10(a) shows different patterns obtained by reconfiguring the samples in polarized optical microscope images at θ=80°, 90°, and 100° for a reconfigurability test, in which different chiral random structures are obtained for each trial, FIGs. 10(b) and FIG. 10(c) show results of a thermal stability test and a solvent stability test of the fabricated chiral photonic crystals, and FIG. 10(d) shows chiral random patterns observed using a smartphone.

### DETAILED DESCRIPTION OF THE INVENTION

Unless otherwise defined, all technical and scientific terms used herein have the same meanings as typically understood by those skilled in the art to which the present invention belongs. In general, the nomenclature used herein is well known in the art and is typical.

In the present invention, it has been confirmed that an organic molecular structure in which spontaneous chiral symmetry breaking occurs is made of photonic crystals, randomness occurring upon spontaneous chiral symmetry breaking is recorded in the form of a film, and the film thus fabricated is a single film, is applicable to PUFs with high encoding capacity, and shows high performance in reproducibility, uniqueness, unpredictability, and reconfigurability.

Accordingly, an aspect of the present invention pertains to a helical nanofilament (HNF) photonic crystal structure obtained by patterning HNFs in which a bent-shaped liquid crystal molecule is grown in a twisted layered structure by self-assembly.

Hereinafter, a detailed description will be given of the present invention.

As used herein, the term "helical nanofilament (HNF)" refers to a structure in which a liquid crystal molecule having a bent shape is grown to form a layered structure while being twisted with a lattice period of about 200 to 300 nm.

As used herein, the term "photonic crystal" refers to a structure having a lattice period similar to the wavelength of light (hundreds of nm). Since light is both a particle and a wave, constructive and destructive interference occur depending on the wavelength at the lattice period, and a certain wavelength of light causing the constructive interference is reflected. HNFs have a lattice period of hundreds of nm, and when they are arranged, photonic crystals reflecting a specific wavelength of light may be formed (HNF photonic crystals).

Although the B4 phase temperature of liquid crystals varies depending on the molecular structure thereof, most molecules used in the present invention are known to have the B4 phase at a temperature of 140°C or lower.

As used herein, the term "random pattern" refers to a pattern in which HNF photonic crystals twisted in different directions are randomly formed at a level of ones of micrometers.

As used herein, the term "random patternization" may be interpreted as a concept of two-dimensional random arrangement of random patterns. Briefly, it may be seen as randomly scattering black and white random shapes on a two-dimensional plane, namely may be referred to as two-dimensional random pattern formation.

In the present invention, using spontaneous chiral symmetry breaking, one of the characteristics of randomness in nature, randomness is recorded on a film that may be optically observed and applied to a physical unclonable function (PUF).

Existing registered patents focus on the formation and color modulation technology of chiral photonic crystals. The present invention suggests applicability to PUFs using spontaneously generated chiral structures in different directions as well as the optical activity of chiral photonic crystals. An organic molecular structure in which spontaneous chiral symmetry breaking occurs is made of photonic crystals, and randomness in nature that occurs upon spontaneous chiral symmetry breaking is recorded in the form of a film. The recorded randomness may be converted into a digital code through image processing. Also, through statistical approaches, it is proved that the recorded randomness is close to ideal randomness. The film thus fabricated may be used for PUFs with high encoding capacity as a single film, confirming that the fabricated PUF film exhibits high performance in reproducibility, uniqueness, unpredictability, and reconfigurability.

In the present invention, a new PUF is fabricated using spontaneous chiral symmetry breaking. Spontaneous chiral symmetry breaking occurs when a material has a chiral structure or when there is no preference for either chirality. It is known from many studies that the probability of having different chirality in a material is 50% upon symmetry breaking. Although chiral symmetry breaking occurs in various organic molecules or supramolecules, when materials having different chiralities are mixed, chirality thereof is not easily detected by conventional methods, making application thereof to PUFs impossible. In order to solve this problem, the present invention suggests that a material having a helical nanofilament (HNF) structure is used and applicable to PUFs.

In the present invention, the bent-shaped liquid crystal molecule may be at least one selected from the group consisting of an azobenzene dimer, MHOBOW of Chemical Formula 1 below, and NOBOW of Chemical Formula 2 below.

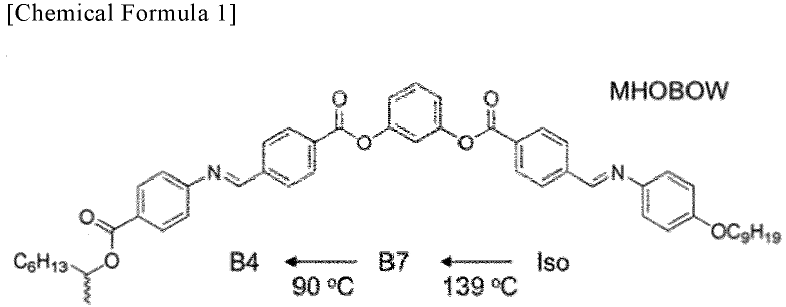

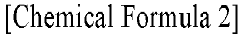

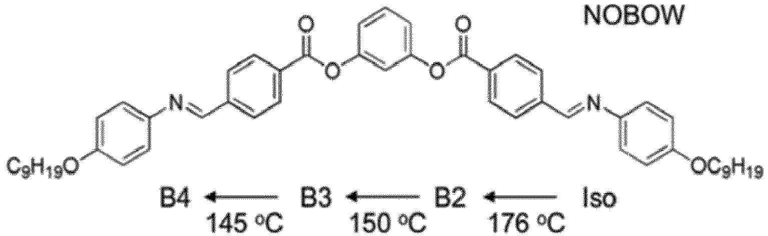

In the present invention, the azobenzene dimer may be represented by Chemical Formula 3 below.

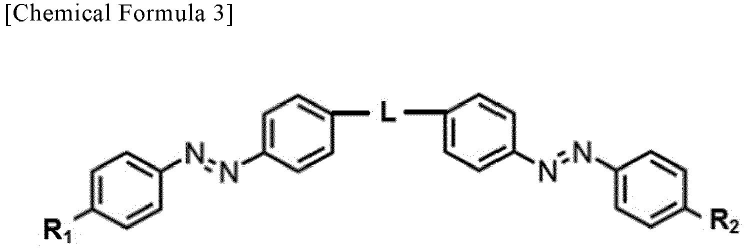

In Chemical Formula 3, L is a straight or branched alkylene group, a cycloalkylene group, a haloalkylene group, an arylene group, a heteroarylene group, an arylene alkylene group, an alkylene arylene group, an alkylene heteroarylene group, a heteroarylene alkylene group, an alkylene ester group, or an alkylene amide group, in which the heteroarylene group is a divalent radical containing a heteroatom selected from among fluorine, oxygen, sulfur, and nitrogen.

Also, R₁ and R₂ are each independently a straight or branched alkyl group, a cycloalkyl group, a haloalkyl group, an alkoxy group, a cycloalkoxy group, an aryl group, a heteroaryl group, an aryloxy group, an alkoxy heteroaryl group, a heteroaryloxy alkyl group, an alkyl heteroaryl group, an alkyl aryl group, an aryl alkyl group, an alkyl heteroaryl group, an alkyl ester group, an alkyl amide group, or an acryl group, in which the heteroaryl group is a monovalent radical containing a heteroatom selected from among fluorine, oxygen, sulfur, and nitrogen.

In L of Chemical Formula 3, preferably, the straight alkylene group is a C1-C12 straight alkylene group, the branched alkylene group is a C1-C12 branched alkylene group, the cycloalkylene group is a C3-C13 cycloalkylene group, the haloalkylene group is a C1-C12 alkylene group substituted with fluorine, chlorine, or iodine, the arylene group is a C6-C13 arylene group, the heteroarylene group is a C5-C13 heteroarylene group, the arylene alkylene group is a C7-C13 arylene alkylene group, the alkylene arylene group is a C7-C13 alkylene arylene group, the alkylene heteroarylene group is a C6-C13 alkylene heteroarylene group, and the heteroarylene alkylene group is a C6-C13 heteroarylene alkylene group.

As used herein, the term "substituted" means that any one or more hydrogen atoms on a designated atom are substituted with a substituent of a designated group, and the substitution condition is that the designated atom has to not exceed the normal valence, and consequently, a stable compound has to be produced after substitution.

In R₁ and R₂ of Chemical Formula 1, preferably, the straight alkyl group is a C1-C12 straight alkyl group, the branched alkyl group is a C1-C12 branched alkyl group, the cycloalkyl group is a C3-C13 cycloalkyl group, the haloalkyl group is a C1-C12 alkyl group substituted with fluorine, chlorine, or iodine, the alkoxy group is a C1-C12 alkoxy group, the cycloalkoxy group is a C3-C13 cycloalkoxy group, the aryl group is a C6-C13 aryl group, the heteroaryl group is a C5-C13 heteroaryl group, the aryloxy group is a C7-C12 aryloxy group, the alkoxy heteroaryl group is a C7-C13 alkoxy heteroaryl group, the heteroaryloxy alkyl group is a C7-C13 heteroaryloxy alkyl group, the alkyl heteroaryl group is a C7-C13 alkyl heteroaryl group, the alkyl aryl group is a C7-C13 alkyl aryl group, the aryl alkyl group is a C7-C13 aryl alkyl group, the alkyl heteroaryl group is a C6-C13 alkyl heteroaryl group, the alkyl ester group is a C2-C13 alkyl ester group, and the alkyl amide group is a C1-C12 alkyl amide group.

Another aspect of the present invention pertains to a method of preparing an HNF photonic crystal structure, including (a) orienting the axis of liquid crystals consisting of HNFs perpendicular to a direction of ultraviolet irradiation by irradiating HNFs with ultraviolet light and (b) reorienting the axis of the liquid crystals parallel to the direction of ultraviolet irradiation by cooling to the B4 phase temperature of the liquid crystals, thus forming HNF photonic crystals, thereby obtaining an HNF photonic crystal structure.

In an embodiment of the present invention, an HNF structure may be expressed using a bent-shaped liquid crystal molecule by introducing an azo moiety into a dimer molecule in which two rod-shaped liquid crystal molecules are bound by a flexible alkyl group. When the liquid crystal molecule including the azo moiety is irradiated with ultraviolet light, it is capable of being oriented perpendicular to the direction of ultraviolet irradiation. Accordingly, liquid crystals are oriented through unpolarized ultraviolet irradiation from the high-temperature nematic/smectic phase, and a supramolecular HNF structure that develops with a decrease in the temperature thereof may be controlled.

In the present invention, the azobenzene dimer is preferably represented by Chemical Formula 4 below.

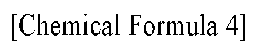

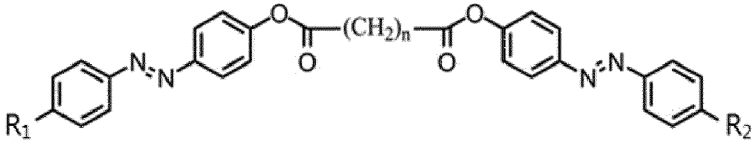

In Chemical Formula 4, R₁ and R₂ are each independently a straight or branched alkyl group, a cycloalkyl group, a haloalkyl group, an alkoxy group, a cycloalkoxy group, an aryl group, a heteroaryl group, an aryloxy group, an alkoxy heteroaryl group, a heteroaryloxy alkyl group, an alkyl heteroaryl group, an alkyl aryl group, an aryl alkyl group, an alkyl heteroaryl group, an alkyl ester group, an alkyl amide group, or an acryl group, in which the heteroaryl group is a monovalent radical containing a heteroatom selected from among fluorine, oxygen, sulfur, and nitrogen.

In a more specific embodiment of the present invention, the azobenzene dimer may be at least one selected from the group consisting of Chemical Formula 4-1, Chemical Formula 4-2, Chemical Formula 4-3, and Chemical Formula 4-4 below.

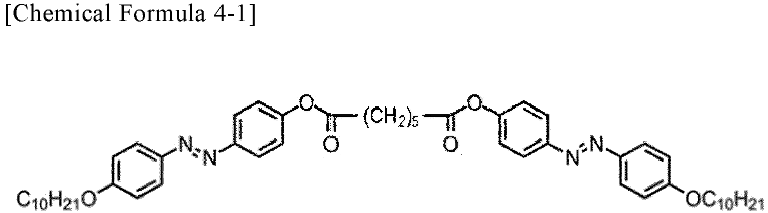

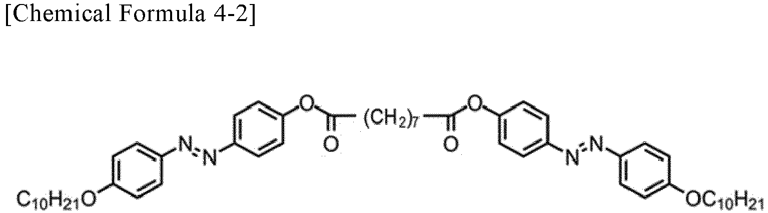

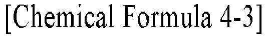

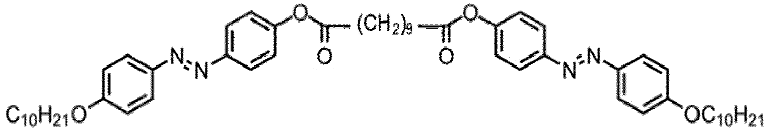

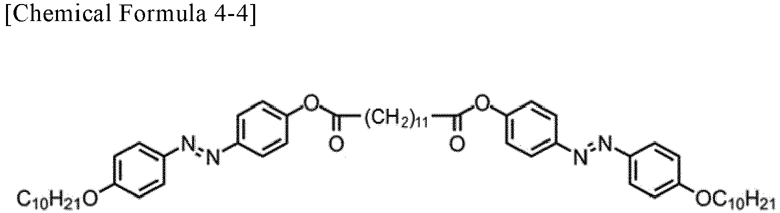

In the present invention, the structure may be used for a physical unclonable function (PUF).

In the present invention, the structure may be provided in the form of a film or flake.

In the manufacturing method of the present invention, the bent-shaped liquid crystal molecule, particularly the azobenzene dimer, is as described above.

In an embodiment of the present invention, a supramolecular structure formed by a liquid crystal molecule may be controlled using a photoreactive molecule, thereby forming photonic crystals. A sandwich cell composed of a black substrate and a transparent substrate is fabricated, liquid crystals are injected into the cell at an isotropic-phase temperature, and after completion of injection, a photomask is placed on the cell, and then irradiated with ultraviolet light and simultaneously cooling is performed. The supramolecular structure of the portion irradiated with ultraviolet light is regularly controlled, and a photonic crystal pattern in the visible light region is formed. The photonic crystals thus formed may be reversibly reused by raising and lowering the temperature. This is groundbreaking technology for commercialization of photonic crystals, such as simplification of the existing photonic crystal fabrication process, reduction of material cost, reusable patterning, and the like.

In the present invention, the non-photonic crystallized HNF film is not fabricated into a security code, but only the HNF photonic crystal film is fabricated into a security code, followed by statistical analysis. The HNF photonic crystal film may be easily fabricated in the desired shape and size in the photolithography step of the fabrication process, and the chiral random pattern is clearly distinguished by the optical rotation phenomenon occurring in chiral photonic crystals (FIG. 1). When chiral photonic crystals are formed, there is no preference for either chirality, and thus both the dextrorotatory structure and the levorotatory structure are formed with equal probability. Through image processing and statistical approaches, it can be confirmed that the probability of being twisted in different directions and arrangement thereof have a random pattern with randomness similar to the level of randomness in nature (FIG. 1). The random pattern film fabricated in this way is capable of attaining uniqueness, high encoding capacity, and high recognition rate among the characteristics of PUFs (FIGs. 4 and 5), and exhibits superior unpredictability and reconfigurability. However, it has low reproducibility due to the pixel-based image processing method. With the goal of solving this problem, additional patterning such as alignment marks through metal deposition may be used, but since the material used in the present invention has a liquid crystal phase, when an alignment mark made of metal is used, high randomness may be lost or structure formation may be hindered due to surface chemistry.

When the azobenzene dimer molecule containing an azo moiety is irradiated with ultraviolet light, it is capable of being oriented perpendicular to the direction of ultraviolet irradiation. Accordingly, liquid crystals are oriented through ultraviolet irradiation from the high-temperature nematic/smectic phase, and an HNF structure that is expressed with a decrease in the temperature thereof is controlled. The axis of the controlled HNF is reorientated parallel to the direction of ultraviolet irradiation, forming chiral photonic crystals in which the helical pitch of the helical structure is formed in the visible light region. For photonic crystals having chirality, there is an optical rotation phenomenon in which incident linearly polarized light rotates due to optical activity. Optical rotation is amplified in the photonic band gap, and the degree and direction of optical rotation vary depending on the wavelength. This degree of rotation may be detected by rotating one polarizer in a polarized optical microscope. A photomask is introduced to form patterned chiral photonic crystals so as to serve as alignment marks, and a film capable of distinguishing chirality by color is fabricated using the tendency of optical rotation (FIG. 4). Since spontaneous chiral symmetry breaking and photonic crystal formation occur independently, the randomness confirmed in FIG. 2 after the photonic crystallization process may be maintained even after patterning. Through image processing, these random patterns may be fabricated into digitized codes (FIG. 5). When the several patterns thus fabricated are analyzed under different microscopes, it can be confirmed that the same pattern or different patterns may be distinguished with a low false acceptance rate (FAR) and false rejection rate (FRR). This means that it is possible to solve the problem of low reproducibility occurring in random patterns without forming photonic crystals (FIGs. 6 and 7).

A photonic crystal patterning process uses a conventional photolithography process. Patterned HNF photonic crystals are formed through selective ultraviolet irradiation using a photomask having a desired pattern, and simultaneously, HNF photonic crystals twisted in different directions are randomly formed.

In the present invention, the degree of freedom for patterning is high. It is possible to fabricate a desired deterministic security code and hide a chiral random pattern that serves as a PUF inside the code, rather than patterning that only functions as a simple alignment mark. As shown in FIG. 4, a QR code is fabricated through a patterning process and a chiral random pattern is hidden therein, enabling double security, resulting in an unclonable code with very high security (FIGs. 8 and 9).

The patterned photonic crystal film thus fabricated may be reconfigured through heat treatment and additional exposure. It can be confirmed that a new pattern is fabricated through an iterative process and a new chiral random pattern is formed even when using the same sample (FIG. 10). This means that it is impossible to predict which chiral random pattern will be formed and also that cloning is impossible. In addition, this film exhibits reconfigurability of fabricating a completely new random pattern by an additional process when exposed to hacking. It can be confirmed that the PUF film fabricated through spontaneous chiral symmetry breaking has a stable structure up to about 110°C and is stable in most polar protic solvents encountered in everyday life. In addition, if this film is made large enough, it may be observed through a general smartphone, such that accessibility is excellent.

A better understanding of the present invention may be obtained through the following examples, but these examples are merely set forth to illustrate the present invention, and various variations and modifications are possible within the scope and spirit of the present invention, as will be obvious to those skilled in the art. Also, it goes without saying that these variations and modifications fall within the scope of the appended claims.

### [Examples]

### Example 1: Fabrication of PUF film with randomly patterned HNF photonic crystals

A sandwich cell using two glass substrates was fabricated. The distance between the two substrates was maintained using silica beads with a size of ones of µm. A liquid crystal sample was injected into the cell using capillary force at about 170°C, which is an isotropic-phase temperature. After completion of injection of liquid crystals, a photomask having a desired pattern was placed on the upper substrate, followed by a photolithography process through irradiation with ultraviolet light having a wavelength of 365 nm. As such, the liquid crystal molecule was oriented by ultraviolet light, and simultaneously, cooling was performed at a uniform cooling rate (1 °C/min) to cause phase transition. Here, the cooling rate was controlled using a temperature controller (Linkam TMS94). Cooling proceeded to the solid B4 phase, and the total required time was about 30 minutes. The final HNF photonic crystals exhibited a reflective color due to the uniformly formed helical nanostructure. Using an azobenzene dimer, HNFs having a size (>10 µm) observable with a general polarized optical microscope were formed. HNFs in both directions were randomly formed, and these patterns were fabricated into digitized codes through image processing using MATLAB.

The azobenzene dimer used in this example was a compound of Chemical Formula 4-2 below, and formed a chiral structure with a size (>10 µm) observable with a general polarized optical microscope (FIG. 1). When this chiral structure was formed, there was no preference for either chirality, and thus both the dextrorotatory structure and the levorotatory structure were formed with equal probability. As shown in FIGs. 2 and 3, it was confirmed through image processing and statistical approaches that the probabilities of being twisted in different directions and arrangement thereof had randomness similar to the level of randomness in nature.

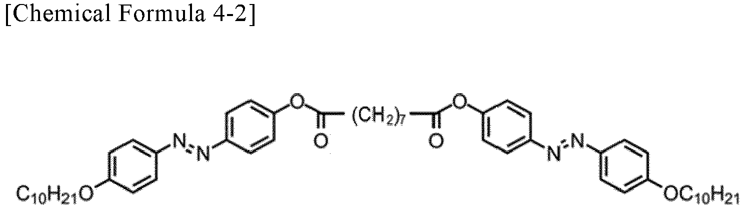

When the azobenzene dimer molecule containing an azo moiety is irradiated with ultraviolet light, it is capable of being oriented perpendicular to the direction of ultraviolet irradiation. Accordingly, liquid crystals are oriented through ultraviolet irradiation from the high-temperature nematic/smectic phase, and an HNF structure that is expressed with a decrease in the temperature thereof is controlled. The axis of the controlled HNF is reorientated parallel to the direction of ultraviolet irradiation, thus forming chiral photonic crystals in which the helical pitch of the helical structure is formed in the visible light region. For photonic crystals having chirality, there is an optical rotation phenomenon in which incident linearly polarized light rotates due to optical activity. Optical rotation is amplified in the photonic band gap, and the degree and direction of optical rotation vary depending on the wavelength. This degree of rotation may be detected by rotating one polarizer in a polarized optical microscope. A photomask was introduced and thus patterned chiral photonic crystals were fabricated and served as alignment marks, and a film capable of distinguishing chirality by color was fabricated using the tendency of optical rotation (FIG. 4).

The non-photonic crystallized HNF film was not fabricated into a security code, but only the HNF photonic crystal film was fabricated into a security code, and then statistical analysis was performed. The HNF photonic crystal film was easily fabricated in the desired shape and size in the photolithography step of the fabrication process, and the chiral random pattern was clearly distinguished by the optical rotation phenomenon occurring in the chiral photonic crystals (FIG. 1).

### Example 2: Binarization and digitization of experimental images of HNF film

As shown in FIGs. 2 and 3, the security code was fabricated only for the HNF photonic crystal film, and binarization and digitization methods were newly improved to exponentially increase the encoding capacity of the security code. Specifically, a θ=80° experimental image of the patterned HNF photonic crystal film is obtained. Here, each circular photonic crystal is defined as a single unit cell. Chiral random patterns are distributed in individual unit cells, and are separated into right-handed and left-handed chiral patterns depending on color differences. The chiral patterns separated into right-handedness and left-handedness are further classified depending on the morphological features of the pattern, including the number of patterns, area, circularity, aspect ratio, position, and orientation. Since each unit cell includes two types of chirality, information on six morphological features may be stored in a 6 × 6 × 2 matrix. Unlike the existing binarization and digitization methods, in the newly improved method, the encoding capacity may be drastically improved to about 10^{13,000} when the number of unit cells of the security code is 256 by appropriately adjusting the interval between the classes for individual features, and the false recognition rate may be minimized. It takes an astronomical amount of time, about 10¹⁹⁹ years, to predict the password of a security code with an encoding capacity of about 10^{13,000} using a brute-force attack. Therefore, by newly improving the binarization and digitization methods, it is possible to attain uniqueness of the further improved security code, high encoding capacity, and high recognition rate.

### Example 3: Authentication of security code

The improved authentication method provides fast authentication and reading reliability of 99.9% or higher based on hierarchical authentication of morphological features. Specifically, the authenticated security code is stored in a database in the form of a matrix. Then, the newly fabricated chiral pattern is digitized in the form of a matrix and compared with the data stored in the database through a five-step screening process by calculating a similarity index. For example, if the similarity index for the "orientation" morphological feature exceeds the threshold, the value for the next morphological feature is compared, and the newly fabricated chiral pattern is determined to be true if all five steps are passed. However, if the similarity index does not exceed the threshold, the screening process is terminated and the newly fabricated chiral pattern is determined to be false. In addition, the recognition rate increases with an increase in the number of unit cells and is even high against external noise, and reproducible results are obtained even when observed with different microscopes. The newly proposed hierarchical authentication method obviates additional algorithmic modification when a new sample is added to the database, and on average it takes 5.14 seconds to determine true and 2.34 seconds to determine false, ensuring high accuracy and fast authentication.

### Example 4: Reconfigurability of PUF film

The as-fabricated patterned photonic crystal film may be reconfigured through heat treatment and an additional exposure process. It was confirmed that a new pattern was formed through an iterative process and that a new chiral random pattern was formed even when using the same sample (FIG. 10). This means that it is impossible to predict which chiral random pattern will be formed and also that cloning is impossible.

In addition, it was confirmed that this film has the reconfigurability of fabricating a completely new random pattern by an additional process when exposed to hacking.

It was confirmed that the PUF film fabricated by spontaneous chiral symmetry breaking has a stable structure up to about 110°C and is stable in most polar protic solvents encountered in everyday life. In addition, if this film is made large enough, it may be observed through a general smartphone, such that accessibility is excellent.

### INDUSTRIAL APPLICABILITY

As is apparent from the above description, in the present invention, an unclonable chiral random pattern can be formed using chiral photonic crystals in which chiral symmetry breaking occurs and can be applied to PUFs. A chiral structure in a film can be detected by simply rotating a polarizer, and can be digitized and applied as a security code.

Chiral domains resulting from spontaneous chiral symmetry breaking of the material proposed in the present invention are capable of being formed much larger than the diffraction limit of visible light, forming photonic crystals, and being easily observed by an optical method, thus making it possible to apply the same to a film with security, unlike other materials in which chiral domains are difficult to observe.

Compared to existing PUFs, the structure for PUFs according to the present invention can be fabricated through a simple process and can exhibit high performance in reproducibility, uniqueness, unpredictability, and reconfigurability.

In conventional techniques, when the security code is leaked to the outside, hacking becomes easy and a new device is required for new security. However, in the present invention, when the security code is hacked, a new security code can be generated without destroying the device through post-processing. Moreover, since it can be implemented with a single organic material without additional alignment markers or materials, the fabrication process is easy relative to high security.

In addition, according to the present invention, a security code based on chiral optical properties is easy to fabricate and is difficult to detect by a general method compared to other optical PUFs. The photolithography-based fabrication process enables the fabrication of a double security code that hides a non-deterministic pattern in a deterministic pattern, such that it has high versatility compared to previously reported techniques and much better performance (exponentially increased encoding capacity and high and fast recognition rate) and uniqueness than existing known techniques.

The technology of the present invention has high encoding capacity and security, and has the advantage of enabling desired patterning through existing photolithography processes. This can replace all existing systems for personal authentication or security at the time point when existing security keys become invalid in the upcoming quantum computing era.

Although specific embodiments of the present invention have been disclosed in detail above, it will be obvious to those skilled in the art that the description is merely of preferable exemplary embodiments and is not to be construed as limiting the scope of the present invention. Therefore, the substantial scope of the present invention will be defined by the appended claims and equivalents thereto.

## Claims

1. A helical nanofilament (HNF) photonic crystal structure obtained by randomly patterning helical nanofilaments (HNFs) in which a bent-shaped liquid crystal molecule is grown in a twisted layered structure by self-assembly.

2. The HNF photonic crystal structure of claim 1, wherein the bent-shaped liquid crystal molecule is at least one selected from the group consisting of an azobenzene dimer, MHOBOW of Chemical Formula 1, and NOBOW of Chemical Formula 2:

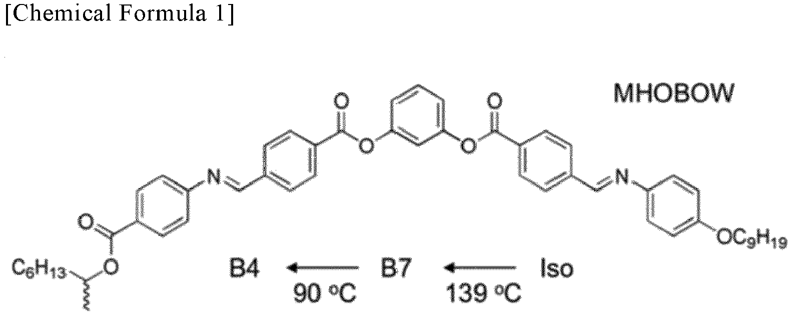

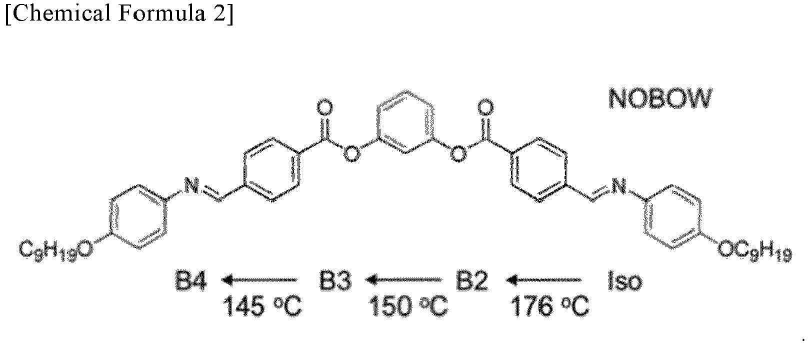

3. The HNF photonic crystal structure of claim 2, wherein the azobenzene dimer is represented by Chemical Formula 3: 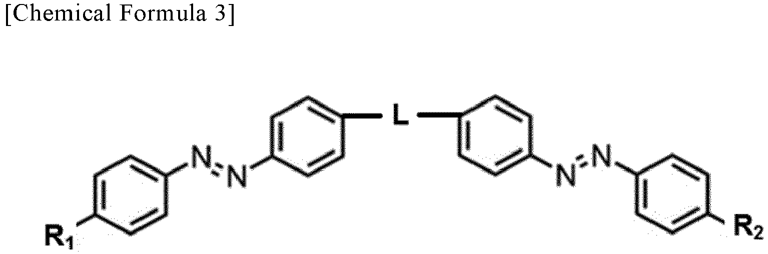
in Chemical Formula 3, L is a straight or branched alkylene group, a cycloalkylene group, a haloalkylene group, an arylene group, a heteroarylene group, an arylene alkylene group, an alkylene arylene group, an alkylene heteroarylene group, a heteroarylene alkylene group, an alkylene ester group, or an alkylene amide group, in which the heteroarylene group is a divalent radical containing a heteroatom selected from among fluorine, oxygen, sulfur, and nitrogen, and
R₁ and R₂ are each independently a straight or branched alkyl group, a cycloalkyl group, a haloalkyl group, an alkoxy group, a cycloalkoxy group, an aryl group, a heteroaryl group, an aryloxy group, an alkoxy heteroaryl group, a heteroaryloxy alkyl group, an alkyl heteroaryl group, an alkyl aryl group, an aryl alkyl group, an alkyl heteroaryl group, an alkyl ester group, an alkyl amide group, or an acryl group, in which the heteroaryl group is a monovalent radical containing a heteroatom selected from among fluorine, oxygen, sulfur, and nitrogen.

4. The HNF photonic crystal structure of claim 3, wherein the azobenzene dimer is represented by Chemical Formula 4: 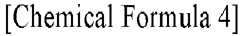 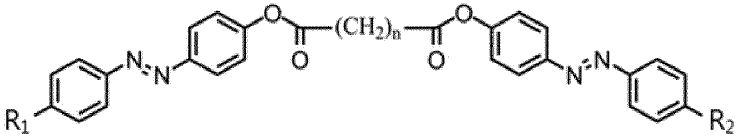 in Chemical Formula 4, R₁ and R₂ are each independently a straight or branched alkyl group, a cycloalkyl group, a haloalkyl group, an alkoxy group, a cycloalkoxy group, an aryl group, a heteroaryl group, an aryloxy group, an alkoxy heteroaryl group, a heteroaryloxy alkyl group, an alkyl heteroaryl group, an alkyl aryl group, an aryl alkyl group, an alkyl heteroaryl group, an alkyl ester group, an alkyl amide group, or an acryl group, in which the heteroaryl group is a monovalent radical containing a heteroatom selected from among fluorine, oxygen, sulfur, and nitrogen, and n is an odd number of 3 to 11.

5. The HNF photonic crystal structure of claim 4, wherein the azobenzene dimer is at least one selected from the group consisting of Chemical Formula 4-1, Chemical Formula 4-2, Chemical Formula 4-3, and Chemical Formula 4-4:

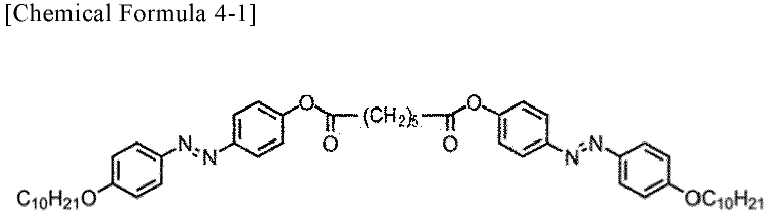

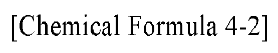

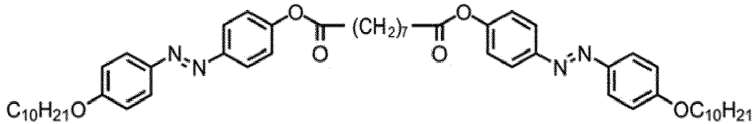

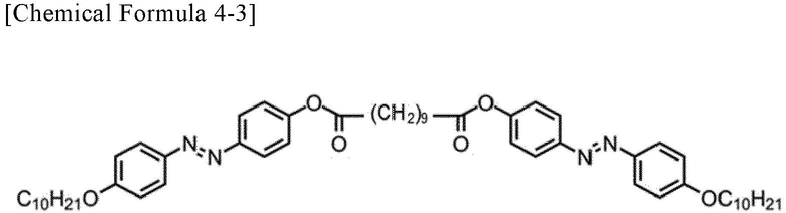

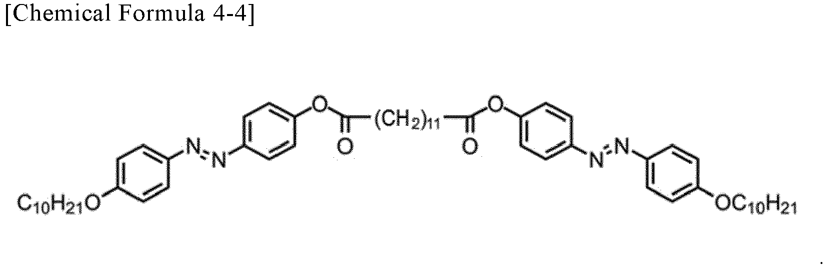

6. The HNF photonic crystal structure of claim 1, which is used for a physical unclonable function.

7. The HNF photonic crystal structure of claim 1, which is provided in a form of a film or flake.

8. A method of preparing the HNF photonic crystal structure of claim 1, comprising:
(a) orienting an axis of liquid crystals consisting of HNFs perpendicular to a direction of ultraviolet irradiation by irradiating HNFs with ultraviolet light; and
(b) obtaining an HNF photonic crystal structure by cooling to a B4 phase temperature of the liquid crystals to reorient the axis of the liquid crystals parallel to the direction of ultraviolet irradiation and thus form HNF photonic crystals.

9. The method of preparing the HNF photonic crystal structure of claim 8, wherein the bent-shaped liquid crystal molecule is at least one selected from the group consisting of an azobenzene dimer, MHOBOW of Chemical Formula 1 and NOBOW of Chemical Formula 2:

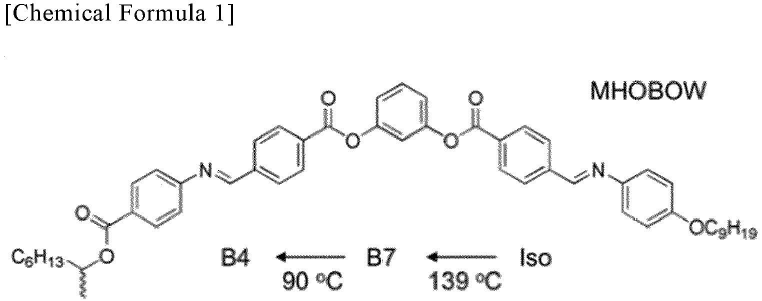

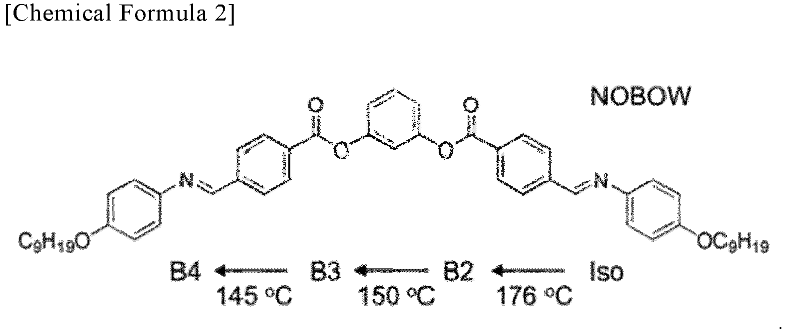

10. The method of preparing the HNF photonic crystal structure of claim 9, wherein the azobenzene dimer is represented by Chemical Formula 3: 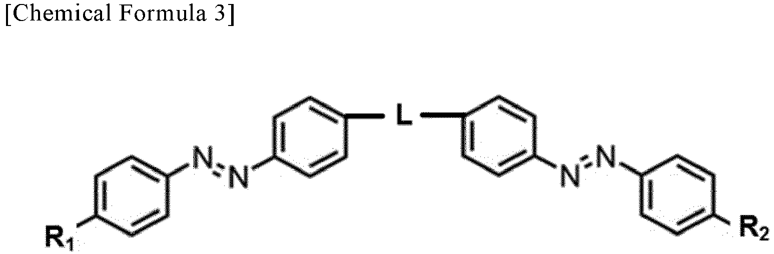
in Chemical Formula 3, L is a straight or branched alkylene group, a cycloalkylene group, a haloalkylene group, an arylene group, a heteroarylene group, an arylene alkylene group, an alkylene arylene group, an alkylene heteroarylene group, a heteroarylene alkylene group, an alkylene ester group, or an alkylene amide group, in which the heteroarylene group is a divalent radical containing a heteroatom selected from among fluorine, oxygen, sulfur, and nitrogen, and
R₁ and R₂ are each independently a straight or branched alkyl group, a cycloalkyl group, a haloalkyl group, an alkoxy group, a cycloalkoxy group, an aryl group, a heteroaryl group, an aryloxy group, an alkoxy heteroaryl group, a heteroaryloxy alkyl group, an alkyl heteroaryl group, an alkyl aryl group, an aryl alkyl group, an alkyl heteroaryl group, an alkyl ester group, an alkyl amide group, or an acryl group, in which the heteroaryl group is a monovalent radical containing a heteroatom selected from among fluorine, oxygen, sulfur, and nitrogen.

11. The method of preparing the HNF photonic crystal structure of claim 10, wherein the azobenzene dimer is represented by Chemical Formula 4: 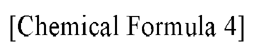 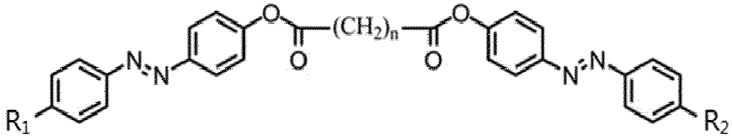 in Chemical Formula 4, R₁ and R₂ are each independently a straight or branched alkyl group, a cycloalkyl group, a haloalkyl group, an alkoxy group, a cycloalkoxy group, an aryl group, a heteroaryl group, an aryloxy group, an alkoxy heteroaryl group, a heteroaryloxy alkyl group, an alkyl heteroaryl group, an alkyl aryl group, an aryl alkyl group, an alkyl heteroaryl group, an alkyl ester group, an alkyl amide group, or an acryl group, in which the heteroaryl group is a monovalent radical containing a heteroatom selected from among fluorine, oxygen, sulfur, and nitrogen, and n is an odd number of 3 to 11.

12. The method of preparing the HNF photonic crystal structure of claim 11, wherein the azobenzene dimer is at least one selected from the group consisting of Chemical Formula 4-1, Chemical Formula 4-2, Chemical Formula 4-3, and Chemical Formula 4-4:
